# EUROPÄISCHE PATENTSCHRIFT

(11) **EP 3 253 570 B1**
(45) Veröffentlichungstag und Bekanntmachung des Hinweises auf die Patenterteilung: **26.09.2018**
(21) Anmeldenummer: 16703915.5
(22) Anmeldetag: 04.02.2016
(51) Int. Cl.: B32B 5/02, A47L 13/17, B32B 5/06, B32B 5/10, B32B 5/26, B32B 7/02, B32B 7/08

(54) **WISCHTUCH**
WIPE
TORCHON

(30) Priorität: 05.02.2015 DE 102015001510
(43) Veröffentlichungstag der Anmeldung: 13.12.2017
(73) Patentinhaber: Avet AG, 8630 Rüti/Zürich (CH)
(72) Erfinder: SACKS, Roland, 6330 Cham (CH)
(74) Vertreter: Börjes-Pestalozza, Henrich
(86) Internationale Anmeldenummer: PCT/EP2016/000185
(87) Internationale Veröffentlichungsnummer: WO 2016/124336

(56) Entgegenhaltungen:
- EP-A1- 2 502 534
- WO-A1-93/07323
- WO-A1-03/043480
- WO-A2-2013/171343
- DE-A1-102010 036 568
- US-A1- 2009 286 437

## Beschreibung

Die Erfindung betrifft ein Wischtuch, das mehrlagig ausgebildet ist und zumindest unmittelbar übereinanderliegende Materiallagen aufweist, die aus textilem Material hergestellt sind und von denen eine erste äußere Materiallage eine außenliegende Wisch- und Reinigungslage bildet und von denen wenigstens eine zweite Materiallage als Speicherlage ausgestaltet ist, wobei im Wischtuch ein Reinigungsmittel vorgesehen ist und wobei das Reinigungsmittel als in zumindest einer der übereinanderliegenden Materiallagen durch Wasserzugabe reaktivierbares Reinigungsmittel ausgebildet ist.

Wischtücher werden beispielsweise verwendet, um Wand- und insbesondere Bodenflächen mit Hilfe eines Reinigungsmittels zu reinigen. Solche Wischtücher werden meist mehrlagig ausgebildet und weisen eine, zur Beaufschlagung der zu reinigenden Fläche bestimmte Wisch- oder Reinigungsfläche auf, auf der eine Speicherlage aufliegt, die das zum Reinigen vorgesehene und meist mit einem Reinigungsmittel durchdrängte Reinigungswasser aufnimmt und nach und nach an die Wisch- oder Reinigungsfläche abgibt. Diese beiden überliegenden Materiallagen können mit einem Deckgewebe randseitig vernäht sein, dass an einem, als handhabe dienenden Mopphalter lösbar befestigt werden und dazu eine entsprechende klettfähige Oberflächenstruktur oder seitliche Haltetaschen aufweist.

Durch das randseitige Vernähen der bei den vorbekannten Wischtüchern übereinanderliegenden Materiallagen und durch die unterschiedlichen Eigenschaften der zu einem Wischtuch miteinander kombinierten verschiedenen Materiallagen besteht das Problem, dass mit diesen Wischtüchern kein gleichmäßiger Reinigungsmittelauftrag und kein über die zu reinigende Fläche gleichmäßiges Reinigungsergebnis gewährleistet ist.

Gerade in Gebäuden, in denen hohe hygienische Anforderungen gestellt werden, wäre es aber wünschenswert, wenn jedenfalls über eine in Abhängigkeit vom Wischtuch und der darin gespeicherten Reinigungsflüssigkeit festgelegte Fläche ein gleichbleibendes Reinigungsergebnis erwartet werden könnte.

Aus der US 2009/286437 A1 ist ein Wischtuch der eingangs erwähnten Art vorbekannt, das aus faserhaltigem Material blattförmig hergestellt ist. In dem vorbekannten Wischtuch sind aufbrechbare Mikrokapseln vorgesehen, die mit einem Reinigungsmittel gefüllt sind. Sofern das vorbekannte Wischtuch mehrlagig ausgestaltet wird, können diese Mikrokapseln zwischen einer ersten und einer zweiten Materiallage angeordnet sein. Durch Wasserzugabe werden die das Reinigungsmittel in sich aufnehmenden Mikrokapseln weich und brechen entsprechend leicht auf, wobei aus diesen aufgebrochenen Mikrokapseln die Reinigungsflüssigkeit in das faserhaltige Material des vorbekannten Wischtuches übergeht.

Bei dem aus US 2009/286437 A1 vorbekannten Wischtuch ist das benötigte Reinigungsmittel in Mikrokapseln verkapselt. Durch Wasserzugabe wird nicht das Reinigungsmittel reaktiviert -, vielmehr werden die Mikrokapseln derart weich, dass sie leicht aufbrechen und die Reinigungsflüssigkeit freigeben können. Nachteilig ist jedoch, dass das als Kapselwand für die Mikrokapseln benötigte Material selbst keine Reinigungswirkung haben muss und deshalb durch Streifen- und Schlierenbildung sogar das Reinigungsbild beeinträchtigen kann. Da die Mikrokapseln druckempfindlich sind und auch vorzeitig aufbrechen können, kann das vorbekannte Wischtuch vor seinem Einsatz und insbesondere auch während seiner Herstellung nicht hohen mechanischen Belastungen ausgesetzt werden.

Aus der DE 10 2010 036 568 A1 ist bereits ein Wischtuch vorbekannt, das als Reinigungstuch für ein Bodenwischgerät bestimmt ist. Das vorbekannte Wischtuch ist mehrschichtig aufgebaut und weist eine Speicherschicht sowie eine Reinigungsschicht auf. Diese Reinigungsschicht ist funktionell mit einer Rückenlage verbunden. Während die Reinigungsschicht ausreichend robust ausgestaltet ist, um eine lange Lebensdauer des vorbekannten Wischtuches auch auf unterschiedlichen Böden zu sichern, soll die Speicherschicht eine kontrollierte Flüssigkeitsaufnahme sicherstellen und gewährleisten, dass bei der Befestigung des vorbekannten Wischtuches am Bodenwischgerät keine Flüssigkeit das Reinigungstuch unkontrolliert verlässt. Während des Betriebes des Bodenwischgerätes gibt die Speicherschicht die Flüssigkeit gleichmäßig an die Reinigungsschicht ab. Da die Rückenlage im Vergleich zur Speicherschicht eine geringere Flüssigkeitsdurchlässigkeit aufweist, kann die Rückenlage auf die Flüssigkeitsabgabe zwischen der Speicherschicht und der Reinigungsschicht in vorteilhafter Weise bremsend wirken.

Bei dem aus DE 10 2010 036 568 A1 vorbekannten Wischtuch ist die Abgabe der Reinigungsflüssigkeit auf die zu reinigende Fläche davon abhängig, wie sehr das vorbekannte Wischtuch vom Reinigungspersonal in der Reinigungsflüssigkeit getränkt wurde. Demgegenüber ist eine genau dosierte Aufnahme von Reinigungsflüssigkeit und eine kontrollierte Abgabe der Reinigungsflüssigkeit während des wischvorganges weder möglich noch vorgesehen.

Aue der EP 2 502 534 A1 ist ein waschbares und wiederverwendbares Reinigungstuch vorbekannt, das auch in trockenem zustand mit einem Reinigungsmittel geladen ist, wobei sich das im trockenen Reinigungstuch enthaltene Reinigungsmittel durch Zugabe von Wasser reaktivieren lässt. Eine mehrlagige Ausgestaltung des vorbekannten Reinigungstuches ist in der EP 2. 502 534 A1 jedoch nicht vorgesehen.

Aus der WO 03/043480 A1 kennt man bereits ein Geschirrputztuch, das eine erste Lage aus einem ungewebten wasserabweisenden Material aufweist, welche erste Lage mit einer zweiten Materiallage verbunden ist, die oberflächlich eine Reinigungspaste mit einem Tensid trägt und die an ihrer der ersten Lage abgewandten Flachseite eine aufgeschmolzene Schicht aus abrasiven Noppen oder Haken aufweist.

Das vorbekannte Geschirrputztuch, das nicht aus textilem Material hergestellt ist, kann einen Reinigungsschwamm ersetzen. Durch die teils auch stark abrasive Oberfläche kann das vorbekannte Geschirrputztuch auch starke Verschmutzungen lösen. Zum flächigen Auftrag eines Reinigungsmittels auf Böden oder Wände ist das vorbekannte Geschirrputztuch demgegenüber nicht bestimmt.

Aus der WO 93/07323 A1 kennt man bereits ein Mikrofaser-Reinigungstuch, das aus mehreren Schichten aus elastischem Material und nicht-elastischem Material besteht und sich durch eine gesteigerte Saugfähigkeit in gedehntem Zustand auszeichnet. Auch dieses vorbekannte Mikrofaser-Reinigungstuch besteht jedoch nicht aus textilem Material und ist als Wischtuch für ein Bodenwischgerät weder vorgesehen noch geeignet.

Aus der WO 2013/171343 A2 kennt man bereits ein Reinigungstuch, das als Wegwerftuch zum einmaligen Reinigen von harten Oberflächen bestimmt ist. Das vorbekannte Reinigungstuch hat eine papierene Schicht, die mit einer ungewebten Faserschicht verbunden ist, welche Mikrokapseln enthält. In diesen Mikrokapseln befindet sich ein Reinigungsmittel, Da das vorbekannte Reinigungstuch nicht aus textilem Material hergestellt ist, ist es zum mehrmaligen Gebrauch weder vorgesehen noch geeignet. Da das Reinigungsmittel in Mikrokapseln verkapselt ist, ist dieses Reinigungatuch mechanisch nicht unbegrenzt belastbar, ohne dass das Reinigungsmittel unbeabsichtigt aus den Mikrokapseln austritt.

Es besteht daher insbesondere die Aufgabe, ein Wischtuch der eingangs erwähnten Art zu schaffen, das über eine festgelegte Fläche einen gleichbleibenden Auftrag von Reinigungsflüssigkeit begünstigt.

Die erfindungsgemäße Lösung dieser Aufgabe besteht bei dem Wischtuch der eingangs erwähnten Art insbesondere darin, dass herstellerseitig eine festgelegte Menge eines trocknungsfähigen und durch Wasserzugabe aktivierbaren Reinigungsmittels in das Wischtuch eingetragen ist, und dass die Wisch- und Reinigungslage und die wenigstens eine Speicherlage durch flächig verteiltes Durchstoßen von Faserstrangabschnitten der einen Materiallage in die benachbarte Materiallage mechanisch flächig miteinander verbunden sind.

Das erfindungsgemäße Wischtuch ist mehrlagig ausgebildet. Von den Materiallagen des erfindungsgemäßen Wischtuches sind zumindest zwei Materiallagen unmittelbar übereinanderliegend. Von diesen unmittelbar übereinanderliegenden Materiallagen bildet eine äußere Materiallage eine außenliegende Wisch- und Reinigungslage, während wenigstens eine zweite Materiallage als Speicherlage ausgebildet ist. Die zumindest zwei übereinanderliegenden Materiallagen sind aus textilem Material hergestellt. Um den Transport der Reinigungsflüssigkeit im erfindungsgemäßen Wischtuch zu gewährleisten, sind die Wisch- und Reinigungslage einerseits und die unmittelbar darauf liegende, wenigstens eine Speicherlage andererseits mechanisch flächig miteinander verbunden. Durch die flächige Verbindung dieser Materiallagen wird ein den gleichmäßigen Flüssigkeitstransport im Wischtuch erschwerender, nur stellenweiser Kontakt dieser Materiallagen vermieden. Da die Materiallagen aus textilem Material hergestellt sind, wird ein gleichmäßiger Transport der Reinigungsflüssigkeit begünstigt. In zumindest einer der Materiallagen, vorzugsweise in zumindest der Wisch- oder Reinigungslage, ist ein durch Wasserzugabe reaktivierbares Reinigungsmittel vorgesehen. Während der Herstellung des erfindungsgemäßen Wischtuches kann herstellerseitig eine festgelegte Menge eines trocknungfähigen und durch Wasserzugabe aktivierbaren Reinigungsmittels in das erfindungsgemäße Wischtuch eingetragen werden. Durch bloße Zugabe einer vorzugsweise ebenfalls festgelegten Menge von Wasser am Ort der zu reinigenden Fläche wird das erfindungsgemäße Wischtuch gebrauchsfertig gemacht, wobei in gleicher Weise hergestellte und zubereitete Wischtücher sich durch gleichbleibende Eigenschaften und Reinigungsergebnisse auszeichnen.

Um den flächigen Flüssigkeitstransport in den übereinanderliegenden Materiallagen des mehrlagigen Wischtuches zu begünstigen, ist erfindungsgemäß vorgesehen, dass die Wisch- und Reinigungslage und die wenigstens eine Speicherlage durch flächig verteiltes Durchstoßen von Faserstrangabschnitten der einen Materiallage in die benachbarte Materiallage mechanisch flächig miteinander verbunden sind. Durch nadelartiges Durchstoßen dieser übereinanderliegenden Materiallagen des mehrlagigen Wischtuches werden Faserstrangabschnitte in der einen Materiallage in die vorzugsweise verfilzte benachbarte Materiallage gestoßen, wo sich die Faserstrangabschnitte der beiden übereinanderliegenden Materiallagen ineinander verkletten. Durch dieses Verkletten der in den benachbarten Materiallagen vorgesehenen Materialstrangabschnitten werden die übereinanderliegenden Materiallagen durch die praktisch dochtartig in die jeweils andere Materiallage vorstehenden Faserstrangabschnitte der textilen Materiallagen derart miteinander verbunden, dass ein guter Flüssigkeitstransport zwischen diesen Materiallagen begünstigt wird. Dabei kann das nadelartige Durchstoßen der Faserstrangabschnitte nur von der einen in die andere Materiallage erfolgen, - möglich ist aber auch, die übereinanderliegenden Materiallagen sowohl von der einen Materiallage aus als auch von der anderen Materiallage aus nadelartig zu bearbeiten.

Damit die Wisch- und Reinigungslage ausreichend durchfeuchtet ist, ist es vorteilhaft, wenn diese Wisch- oder Reinigungslage eine Saug- oder Wasserabgabefähigkeit hat, die im Vergleich zur Speicherlage etwa gleich oder geringfügig höher ist.

Um jedoch einen gleichmäßigen Transport der Reinigungsflüssigkeit im erfindungsgemäßen Wischtuch noch zusätzlich zu begünstigen, sieht eine Weiterbildung gemäß der Erfindung vor, dass die zumindest zwei übereinanderliegenden Materiallagen aus textilem Material wenigstens annähernd gleicher Saug- oder Wasserabgabefähigkeit hergestellt sind. Unter einer im wesentlichen gleichen Saug- oder Wasserabgabefähigkeit sei hier eine um allenfalls +/- 15 Prozent abweichende Saug- oder Wasserabgabefähigkeit der unmittelbar übereinander liegenden Materiallagen verstanden.

Dabei sieht eine bevorzugte Ausführungsform gemäß der Erfindung vor, dass die zumindest zwei übereinanderliegenden Materiallagen des mehrlagigen Wischtuches als mechanisch verdichteter Filz hergestellt sind. Solche Filzlagen lassen sich besonders gut flächig miteinander verbinden und zeichnen sich durch eine hohe Wasserspeicherfähigkeit aus.

Um das erfindungsgemäße Wischtuch selbst bei starker Beanspruchung mehrfach verwenden zu können, ist es zweckmäßig, wenn die Materiallagen aus einer Mikrofaser, insbesondere aus einer Polyamid- oder Polyesterfaser, hergestellt sind. Insbesondere ein erfindungsgemäßes Wischtuch, dessen Wisch- und Reinigungslage sowie dessen zumindest eine Speicherlage aus einer Mikrofaser hergestellt sind, zeichnet sich durch eine besondere gute Reinigungswirkung aus.

Damit das erfindungsgemäße Wischtuch das benötigte Reinigungsmittel und anschließend auch die zum Aktivieren des Reinigungsmittels erforderliche Reinigungsflüssigkeit aufnehmen kann, sieht eine bevorzugte Weiterbildung gemäß der Erfindung vor, dass in zumindest einer Materiallage ein Lösungsvermittler vorgesehen ist, der die Affinität in dieser zumindest einer Materiallage gegenüber anionischen Gruppen steigert. Eine solche, zumindest eine Materiallage, deren Affinität gegenüber anionischen Gruppen gesteigert ist, vermag insbesondere solche Reinigungsmittel in größeren Mengen aufzunehmen, die aus geladenen Bestandteilen aufgebaut sind.

Dabei sieht eine bevorzugte Weiterbildung gemäß der Erfindung vor, dass der Lösungsvermittler eine Ester-Verbindung vorzugsweise ein Phosphor-Ester und insbesondere eine Organo-Phosphorsäuere-Ester ist.

Damit das erfindungsgemäße Wischtuch eine besonders hohe Reinigungswirkung erzielt und damit diese hohe Reinigungswirkung auch über eine größere festgelegte Fläche gleichbleibend erzielt werden kann, ist es zweckmäßig, wenn der Lösungsvermittler in der Reinigungslage vorgesehen ist.

Eine bevorzugte Weiterbildung gemäß der Erfindung sieht vor, dass das Wischtuch zwei Flachseiten hat, von denen nur eine Flachseite des Wischtuches als außenliegende Wisch- und Reinigungslage ausgestaltet ist. Dieser außenliegenden wisch- und Reinigungslage ist zumindest eine zweite Materiallage als Speicherlage zugeordnet.

Das erfindungsgemäße Wischtuch kann beispielsweise auch zur manuellen Anwendung vorgesehen sein. Eine bevorzugte Ausführungsform gemäß der Erfindung sieht jedoch vor, dass das Wischtuch an seiner der Wisch- und Reinigungslage abgewandten Flachseite eine klettfähige Oberfläche und/oder vorzugsweise an gegenüberliegenden Randbereichen angeordnete Haltelaschen aufweist zur Befestigung des Wischtuches an einem Mopphalter eines Wischmopps.

Eine besonders einfache und leicht herstellbare Ausführungsform gemäß der Erfindung sieht vor, dass die Wisch- und Reinigungslage und die wenigstens eine zugeordnete Speicherlage durch flächig verteiltes Durchstoßen von Faserstrangabschnitten der einen Materiallage in die vorzugsweise verfilzte (n) benachbarte(n) Materiallage(n) mechanisch miteinander verbunden sind.

Das erfindungsgemäße Wischtuch zeichnet sich insbesondere dann durch definierte Reinigungseigenschaften aus, wenn nur eine der beiden Wischtuch-Flachseiten als Wisch- und Reinigungslage vorgesehen ist.

## Patentansprüche

1. Wischtuch, das mehrlagig ausgebildet ist und zumindest zwei unmittelbar übereinanderliegende Materiallagen aufweist, die aus textilem Material hergestellt sind und von denen eine erste äußere Materiallage eine außenliegende Wisch- und Reinigungslage bildet und von denen wenigstens eine zweite Materiallage als Speicherlage ausgebildet ist, wobei im Wischtuch ein Reinigungsmittel vorgesehen ist und wobei das Reinigungsmittel als in zumindest einer der übereinander liegenden Materiallagen durch Wasserzugabe reaktivierbares Reinigungsmittel ausgebildet ist, **dadurch gekennzeichnet, dass** herstellerseitig eine festgelegte Menge eines trockungsfähigen und durch Wasserzugabe aktivierbaren Reinigungsmittels in das Wischtuch eingetragen ist, und dass die Wisch- und Reinigungslage und die wenigstens eine Speicherlage durch flächig verteiltes Durchstoßen von Faserstrangabechnitten der einen Materiallage in die benachbarte Materiallage mechanisch flächig miteinander verbunden sind.

2. Wischtuch nach Anspruch 1, **dadurch gekennzeichnet, dass** die Wisch- und Reinigungslage eine Saug- oder Wasserabgabefähigkeit hat, die im Vergleich zu der wenigstens einen Speicherlage etwa gleich oder geringfügig höher ist.

3. Wischtuch nach Anspruch 1 oder 2, **dadurch gekennzeichnet, dass** die zumindest zwei übereinanderliegenden Materiallagen aus textilem Material wenigstens annähernd gleicher Saug- oder Wasserabgabefähigkeit hergestellt sind.

4. Wischtuch nach Anspruch 1 bis 3, **dadurch gekennzeichnet, dass** zumindest zwei der übereinanderliegenden Materiallagen als mechanisch verdichteter Filz hergestellt sind.

5. Wischtuch nach einem der Ansprüche 1 bis 4, **dadurch gekennzeichnet, dass** zumindest zwei der übereinanderliegenden Materiallagen aus einer Mikrofaser, insbesondere aus einer Polyamid- oder Polyesterfaser oder einem Gemisch solcher Fasern, hergestellt sind.

6. Wischtuch nach einem der Ansprüche 1 bis 5, **dadurch gekennzeichnet, dass** in zumindest einer der zumindest zwei Materiallagen ein Lösungsvermittler vorgesehen ist, der die Affinität in dieser Materiallage gegenüber anionischen Gruppen steigert.

7. Wischtuch nach Anspruch 6, **dadurch gekennzeichnet, dass** der Lösungsvermittler eine Ester-Verbindung, vorzugsweise ein Polyester und insbesondere ein Organo-PhosphorsäureEster ist.

8. Wischtuch nach Anspruch 6 oder 7, **dadurch gekennzeichnet, dass** der Lösungsvermittler zumindest in der Wisch- oder Reinigungslage vorgesehen ist.

9. Wischtuch nach einem der Ansprüche 1 bis 8, **dadurch gekennzeichnet, dass** das Wischtuch zwei Flachseiten hat, von denen nur eine Flachseite des Wischtuches als außenliegende Wisch- und Reinigungslage ausgestaltet ist.

10. Wischtuch nach einem der Ansprüche 1 bis 9, **dadurch gekennzeichnet, dass** das Wischtuch an seiner der Wisch- und Reinigungslage abgewandten Flachseite eine klettfähige Oberfläche und/oder an gegenüberliegenden Randbereichen angeordnete Haltelaschen aufweist zur Befestigung des Wischtuches an einem Mopphalter eines Wischmopps.

11. Wischtuch nach einem der Ansprüche 6 bis 10, **dadurch gekennzeichnet, dass** die Wisch- und Reinigungslage und die wenigstens eine zugeordnete Speicherlage durch flächig verteiltes Durchstoßen von Faserstrangabschnitten der einen Materiallage in die vorzugsweise verfilzte(n) benachbarte(n) Materiallage(n) mechanisch miteinander verbunden sind.

12. Wischtuch nach einem der Ansprüche 1 bis 11, **dadurch gekennzeichnet, dass** nur eine der beiden Wischtuch-Flachseiten des Wischtuches als Wisch- und Reinigungslage ausgebildet ist.

## Claims

1. Wiping cloth which is configured so as to be multi-layered and has at least two material layers lying directly on top of one another, of which one first outer material layer forms an external wiping and cleaning layer, and of which at least one second material layer is configured as a storage layer, wherein a cleaning agent is provided in Wiping cloth, and wherein the cleaning agent is configured as cleaning agent that is reactivatable by adding water and so as to lie in at least one of the material layers lying on top of one another, **characterized in that** a fixedly established quantity of a drying-capable cleaning agent that is activatable by adding water is incorporated into Wiping cloth by the manufacturer, and **in that** Wiping and cleaning layer and the at least one storage layer are mechanically interconnected in a planar manner by driving fiber strand portions of the one material layer into the neighboring material layer in a planar distributed manner.

2. Wiping cloth according to Claim 1, **characterized in that** Wiping and cleaning layer has an absorbency or a water-release capability which is approximately equal to or slightly higher than that of the at least one storage layer.

3. Wiping cloth according to either of Claims 1 and 2, **characterized in that** the at least two material layers lying on top of one another are made from textile materials having at least approximately identical absorbency or water-release capabilities.

4. Wiping cloth according to one of Claims 1 to 3, **characterized in that** at least two of the material layers lying on top of one another are made as a mechanically compacted felt.

5. Wiping cloth according to one of Claims 1 to 4, **characterized in that** at least two of the material layers lying on top of one another are made from a microfiber, in particular from a polyamide or polyester fiber, or from a mixture of such fibers.

6. Wiping cloth according to one of Claims 1 to 5, **characterized in that** a solubilizer is provided in at least one of the at least two material layers, said solubilizer enhancing the affinity to anionic groups in this material layer.

7. Wiping cloth according to Claim 6, **characterized in that** the solubilizer is an ester compound, preferably a polyester and in particular an organo-phosphoric acid ester.

8. Wiping cloth according to either of Claims 6 and 7, **characterized in that** the solubilizer is provided in at least Wiping or cleaning layer.

9. Wiping cloth according to one of Claims 1 to 8, **characterized in that** Wiping cloth has two flat sides of which only one flat side of Wiping cloth is designed as an external wiping and cleaning layer.

10. Wiping cloth according to one of Claims 1 to 9, **characterized in that** Wiping cloth on that flat side thereof that faces away from Wiping and cleaning layer has a hook-and-pile capable surface and/or holding tabs that for fastening Wiping cloth to a mop holder of a wiping mop are disposed on mutually opposite peripheral regions.

11. Wiping cloth according to one of Claims 6 to 10, **characterized in that** Wiping and cleaning layer and the at least one assigned storage layer are mechanically interconnected by driving fiber strand portions of the one material layer into the preferably felted neighboring material layer(s) in a planar distributed manner.

12. Wiping cloth according to one of Claims 1 to 11, **characterized in that** only one of the two wiping-cloth flat sides of Wiping cloth is configured as Wiping and cleaning layer.

## Revendications

1. Torchon, qui est réalisé en plusieurs couches et qui présente au moins deux couches de matière directement superposées, qui sont fabriquées en une matière textile et dont une première couche de matière extérieure forme une couche extérieure d'essuyage et de nettoyage et dont au moins une deuxième couche de matière est réalisée comme couche d'accumulation, dans lequel il est prévu dans le torchon un agent de nettoyage et dans lequel l'agent de nettoyage est constitué par un agent de nettoyage pouvant être réactivé par addition d'eau dans au moins une des couches de matière disposées l'une au-dessus de l'autre, **caractérisé en ce qu'**une quantité déterminée d'un agent de nettoyage capable de sécher et d'être activé par addition d'eau est incorporée chez le fabricant dans le torchon, et **en ce que** la couche d'essuyage et de nettoyage et ladite au moins une couche d'accumulation sont assemblées mécaniquement à plat l'une à l'autre par piquage réparti en surface de parties de cordons de fibres d'une couche de matière dans la couche de matière voisine.

2. Torchon selon la revendication 1, **caractérisé en ce que** la couche d'essuyage et de nettoyage présente un pouvoir d'absorption ou de restitution d'eau, qui est sensiblement égal ou légèrement plus élevé par comparaison avec ladite au moins une couche d'accumulation.

3. Torchon selon la revendication 1 ou 2, **caractérisé en ce que** lesdites au moins deux couches de matière superposées sont fabriquées en matière textile ayant au moins approximativement le même pouvoir d'absorption ou de restitution d'eau.

4. Torchon selon l'une quelconque des revendications 1 à 3, **caractérisé en ce qu'**au moins deux des couches de matière superposées sont fabriquées sous forme de feutre mécaniquement comprimé.

5. Torchon selon l'une quelconque des revendications 1 à 4, **caractérisé en ce qu'**au moins deux des couches de matière superposées sont fabriquées en microfibre, en particulier en une fibre de polyamide ou de polyester ou en un mélange de telles fibres.

6. Torchon selon l'une quelconque des revendications 1 à 5, **caractérisé en ce qu'**il est prévu dans au moins une desdites au moins deux couches de matière un agent de solubilisation, qui augmente l'affinité dans cette couche de matière à l'égard de groupes anioniques.

7. Torchon selon la revendication 6, **caractérisé en ce que** l'agent de solubilisation est un composé d'ester, de préférence un polyester et en particulier un ester d'acide phosphorique organique.

8. Torchon selon la revendication 6 ou 7, **caractérisé en ce que** l'agent de solubilisation est prévu au moins dans la couche d'essuyage et de nettoyage.

9. Torchon selon l'une quelconque des revendications 1 à 8, **caractérisé en ce que** le torchon présente deux côtés plats, dont seul un côté plat du torchon est réalisé comme couche d'essuyage et de nettoyage extérieure.

10. Torchon selon l'une quelconque des revendications 1 à 9, **caractérisé en ce que** le torchon présente une surface d'accrochage sur son côté plat situé à l'opposé de la couche d'essuyage et de nettoyage et/ou des pattes de maintien disposées sur des bords opposés pour la fixation à un support de torchon d'un balai à franges.

11. Torchon selon l'une quelconque des revendications 6 à 10, **caractérisé en ce que** la couche d'essuyage et de nettoyage et ladite au moins une couche d'accumulation associée sont assemblées mécaniquement l'une à l'autre par piquage réparti en surface de parties de cordons de fibres d'une couche de matière dans la/les couche(s) de matière voisine(s) de préférence feutrée(s).

12. Torchon selon l'une quelconque des revendications 1 à 11, **caractérisé en ce que** seul un des deux côtés plats du torchon est constitué par une couche d'essuyage et de nettoyage.
